(19) Europäisches Patentamt / European Patent Office / Office européen des brevets

(11) **EP 4 741 586 A1**

(12) **EUROPEAN PATENT APPLICATION**
published in accordance with Art. 153(4) EPC

(43) Date of publication:
**13.05.2026 Bulletin 2026/20**

(21) Application number: **23944444.1**

(22) Date of filing: **03.07.2023**

(51) International Patent Classification (IPC):
**E02F 9/22** $^{(2006.01)}$    **F15B 21/14** $^{(2006.01)}$
**F15B 11/05** $^{(2006.01)}$

(52) Cooperative Patent Classification (CPC):
**E02F 9/22; F15B 11/05; F15B 21/14**

(86) International application number:
**PCT/KR2023/009352**

(87) International publication number:
**WO 2025/009628 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Volvo Construction Equipment AB
631 85 Eskilstuna (SE)**

(72) Inventors:
• **BAE, Sangki**
  **Changwon-si Gyeongsangnam-do 51449 (KR)**
• **KWON, Hoeryoung**
  **Changwon-si Gyeongsangnam-do 51564 (KR)**
• **YOON, Gijun**
  **Changwon-si Gyeongsangnam-do 51382 (KR)**

(74) Representative: **Kransell & Wennborg KB
P.O. Box 2096
403 12 Göteborg (SE)**

(54) **WORKING MACHINE AND METHOD FOR CONTROLLING SAME**

(57) This working machine may comprise: a high pressure side; a low pressure side; a hydraulic machine configured to rotate and drive a load; an inlet valve configured to allow or block fluid communication between the high pressure side and an inlet side of the hydraulic machine; an outlet valve configured to allow or block fluid communication between an outlet side of the hydraulic machine and the low pressure side; and a control unit configured to perform hydraulic machine control to, if an actual differential pressure ($\Delta P_{act}$) of a differential pressure ($\Delta P = P_h - P_i$) between a hydraulic pressure ($P_h$) on the high pressure side and a pressure ($P_i$) on the inlet side of the hydraulic machine becomes less than a preset reference differential pressure ($\Delta Pref$), increase the capacity of the hydraulic machine, and if the actual differential pressure becomes greater than the reference differential pressure, reduce the capacity of the hydraulic machine. In addition, the control unit may be configured to perform valve control to, if the actual rotational speed of the hydraulic machine becomes less than the required rotational speed of the hydraulic machine corresponding to a request input to an operator input device, increase the degree of opening of the inlet valve, and if the actual rotational speed becomes greater than the required rotational speed, reduce the degree of opening.

FIG. 2

## Description

TECHNICAL FIELD

The present disclosure relates to a working machine and a method for controlling the same, and relates to a working machine and a method for controlling the same, which optimally controls the displacement of a hydraulic machine that rotates and drives a load and the opening and closing of an inlet valve.

BACKGROUND ART

Hydraulic systems are used in a variety of applications. For example, working machines typically rely on hydraulic systems to provide power to handle loads. Hydraulic systems for working machines may include various hydraulic actuators, such as hydraulic cylinders and rotary hydraulic machines. A hydraulic cylinder may be provided for operating a working device including, for example, an arm and a bucket. Rotary hydraulic machines can be used, for example, for propulsion of working machines and/or for swing of excavators. Hydraulic hybrid systems can be used to reduce fuel consumption in internal combustion engines, for example, by recovering energy from hydraulic actuators.

A hydraulic system that includes a dedicated high pressure side and a dedicated low pressure side may be referred to as a dual pressure hydraulic system. A dual pressure hydraulic system typically includes one or more high pressure accumulators connected to the high pressure side, and one or more low pressure accumulators connected to the low pressure side. Advantages associated with dual pressure hydraulic systems are, for example, improved energy efficiency and controllability.

DETAILED DESCRIPTION OF THE INVENTION

Means for Solving Problem

According to a first aspect of the present disclosure, there is provided a working machine comprising: a high pressure side; a low pressure side; a hydraulic machine configured to rotate and drive a load; an inlet valve configured to allow or block fluid communication between the high pressure side and an inlet side of the hydraulic machine; an outlet valve configured to allow or block fluid communication between an outlet side of the hydraulic machine and the low pressure side; and a control unit configured to perform hydraulic machine control to, if an actual differential pressure ($\Delta P_{act}$) of a differential pressure ($\Delta P = P_h - P_i$) between a hydraulic pressure ($P_h$) on the high pressure side and a pressure ($P_i$) on the inlet side of the hydraulic machine becomes less than a preset reference differential pressure ($\Delta P_{ref}$), increase the displacement of the hydraulic machine, and if the actual differential pressure becomes greater than the reference differential pressure, decrease the displacement of the hydraulic machine.

In some examples, the hydraulic machine is a traveling actuator, and the reference differential pressure can be set based on the ground level traveling of the working machine.

In some examples, an operator input device configured to receive a request for a rotational speed of the hydraulic machine is further comprised, and the control unit may be configured to perform valve control to, if the actual rotational speed ($V_{act}$) of the hydraulic machine becomes less than the demanded rotational speed ($V_{dmd}$) of the hydraulic machine corresponding to the request input to the operator input device, increase the degree of opening of the inlet valve, and if the actual rotational speed ($V_{act}$) becomes greater than the demanded rotational speed ($V_{dmd}$), decrease the degree of opening.

According to a second aspect of the present disclosure, there is provided a working machine comprising: a high pressure side; a low pressure side; a hydraulic machine configured to rotate and drive a load; an inlet valve configured to allow or block fluid communication between the high pressure side and an inlet side of the hydraulic machine; an outlet valve configured to allow or block fluid communication between an outlet side of the hydraulic machine and the low pressure side; an operator input device configured to receive a request for a rotational speed of the hydraulic machine; and a control unit configured to perform valve control to, if an actual rotational speed of the hydraulic machine becomes less than a demanded rotational speed of the hydraulic machine corresponding to the request input to the operator input device, increase the degree of opening of the inlet valve, and if the actual rotational speed becomes greater than the demanded rotational speed, decrease the degree of opening.

In some examples, the hydraulic machine may be a traveling actuator.

In some examples, the hydraulic machine may be a hydraulic motor.

In some examples, it may further comprise at least one hydraulic cylinder and/or a swing hydraulic motor in which an inlet side is configured to be in fluid communication with the high pressure side and an outlet side is configured to be in fluid communication with the low pressure side.

In some examples, a first valve and a second valve are included as the inlet valves, and a third valve and a fourth valve are included as the outlet valves, wherein the first valve is disposed between the high pressure side and a first side of the hydraulic machine, the second valve is disposed between the high pressure side and a second side of the hydraulic machine, the third valve is disposed between the low pressure side and the first side, and the fourth valve is disposed between the low pressure side and the second side, and when the first valve is opened, the second valve is closed, the third valve is closed, and the fourth valve is opened, the first side can be in fluid communication with the high pressure side as the inlet side and the second side can be in fluid communication with the low pressure side as the outlet side, and when the first valve is closed, the second valve is opened, the third valve is opened, and the fourth valve is closed, the second side can be in fluid communication with the high pressure side as the inlet side and the first side can be in fluid communication with the low pressure side as the outlet side.

In some examples, the working machine may additionally comprise a pump configured to provide pressurized fluid to the high pressure side.

In some examples, the high pressure side may comprise at least one high pressure accumulator, and the low pressure side may comprise at least one low pressure accumulator.

According to a third aspect of the present disclosure, there is provided a method for controlling a working machine, wherein the working machine comprises; a high pressure side; a low pressure side; a hydraulic machine configured to rotate and drive a load; an inlet valve configured to allow or block fluid communication between the high pressure side and an inlet side of the hydraulic machine; and an outlet valve configured to allow or block fluid communication between an outlet side of the hydraulic machine and the low pressure side, and wherein the method comprises performing a hydraulic machine control to, if an actual differential pressure ($\Delta P_{act}$) of a differential pressure ($\Delta P = P_h - P_i$) between a hydraulic pressure ($P_h$) on the high pressure side and a pressure ($P_i$) on the inlet side of the hydraulic machine becomes less than a preset reference differential pressure ($\Delta Pref$), increase the displacement of the hydraulic machine, and if the actual differential pressure becomes greater than the reference differential pressure, decrease the displacement of the hydraulic machine.

In some examples, the working machine further comprises an operator input device configured to receive a request for a rotational speed of the hydraulic machine, and the method may comprise performing valve control to, if the actual rotational speed ($V_{act}$) of the hydraulic machine becomes less than the demanded rotational speed ($V_{dmd}$) of the hydraulic machine corresponding to the request input to the operator input device, increase the degree of opening of the inlet valve, and if the actual rotational speed ($V_{act}$) becomes greater than the demanded rotational speed ($V_{dmd}$), decrease the degree of opening.

According to a fourth aspect of the present disclosure, there is provided a method for controlling a working machine, wherein the working machine comprises: a high pressure side; a low pressure side; a hydraulic machine configured to rotate and drive a load; an inlet valve configured to allow or block fluid communication between the high pressure side and an inlet side of the hydraulic machine; an outlet valve configured to allow or block fluid communication between an outlet side of the hydraulic machine and the low pressure side; and an operator input device configured to receive a request for a rotational speed of the hydraulic machine, and wherein the method comprises performing valve control to, if an actual rotational speed ($V_{act}$) of the hydraulic machine becomes less than a demanded rotational speed ($V_{dmd}$) of the hydraulic machine corresponding to the request input to the operator input device, increase the degree of opening of the inlet valve, and if the actual rotational speed ($V_{act}$) becomes greater than the demanded rotational speed ($V_{dmd}$), decrease the degree of opening.

The working machine according to the first and second aspects and the control method according to the third and fourth aspects of the present disclosure can provide the advantage of minimizing pressure loss.

According to a fifth aspect of the present disclosure, there is provided a control unit comprising a processing circuit configured to perform the above-described methods.

According to a sixth aspect of the present disclosure, there is provided a computer program stored in a storage medium including program code for performing the above-described methods when executed on a processing circuit of a computer or control unit.

The above aspects, the appended claims and the examples disclosed herein either above or below may be appropriately combined with each other, as will be apparent to a person skilled in the art.

Additional features and advantages are disclosed in the following description, claims and drawings, and additional features and advantages will to some extent be readily apparent to a person skilled in the art or may be understood by practicing the disclosure described herein. Additionally, control units, computer-readable media and computer program products related to the aforementioned technical advantages are disclosed herein.

Brief Description of Drawings

FIG. 1 is a schematic diagram of a working machine according to an example of the present disclosure.
FIG. 2 is a block diagram of a hydraulic system of the working machine of FIG. 1.
FIG. 3 is a partially enlarged view of the hydraulic system of FIG. 2 showing an example of valve arrangement.
FIG. 4 is a conceptual diagram that simply shows the characteristics of the hydraulic system of FIG. 2, which has a high pressure side and a low pressure side compared to a conventional hydraulic system.
FIG. 5 is a conceptual diagram showing displacement control of a rotary hydraulic machine performed in a hydraulic system according to a comparative example.
FIG. 6 and FIG. 7 are drawings for explaining a hydraulic system according to an example of the present disclosure, wherein FIG. 6 is a conceptual diagram showing displacement control of a rotary hydraulic machine performed in the hydraulic system, and FIG. 7 is a conceptual diagram showing the control of the degree of opening of an inlet valve performed in the hydraulic system.

FIG. 8 is a drawing showing changes in the pressure on the inlet side and changes in displacement and actual rotational speed of a rotary hydraulic machine when a working machine having a hydraulic system according to an example of the present disclosure of FIGS. 6 and 7 is driven on flat ground and then driven on an uphill slope.

Form for implementing the invention

Aspects of the present disclosure, cited as examples, are described in detail below with reference to the attached drawings. The aspects described below provide information necessary to enable a person of ordinary skill in the art to practice the present disclosure.

The present disclosure can be applied to hydraulic systems of working machines in the fields of industrial construction machinery, material handling machinery or construction equipment, particularly wheel loaders and excavators. Although the present disclosure will be primarily described with respect to an excavator, the present disclosure is not limited to this particular machine and may be used in any working machine including a hydraulic system having a high pressure side and a low pressure side, such as a wheel loader, an articulated or rigid hauler, and a backhoe loader.

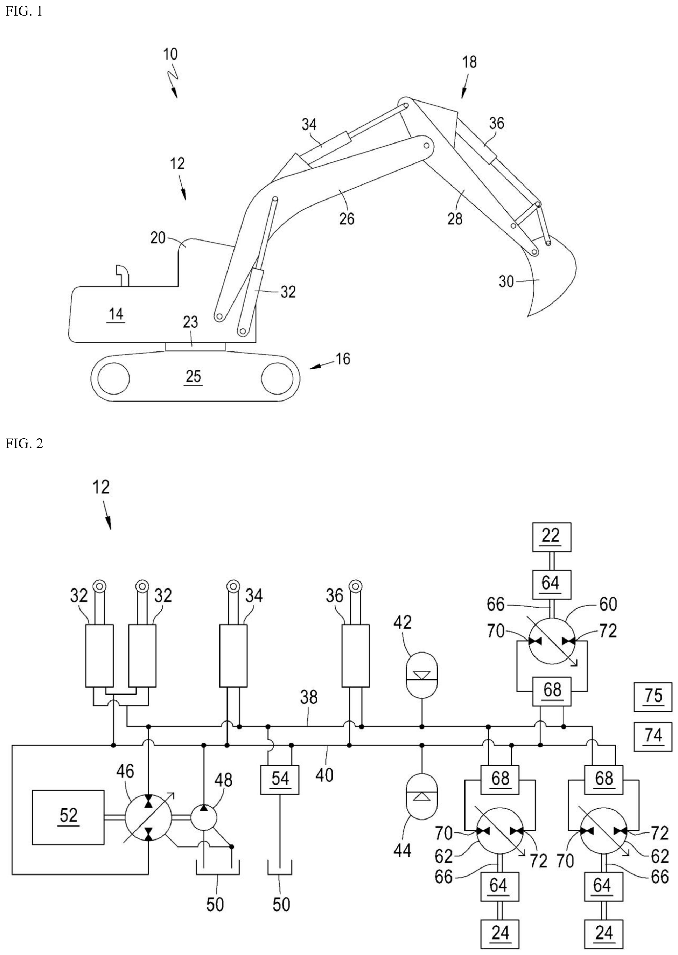

FIG. 1 is a schematic diagram of a working machine 10 according to an example of the present disclosure. The working machine 10 may comprise a hydraulic system 12 according to the present invention. In FIG. 1, the working machine 10 is exemplified as an excavator.

The working machine 10 may comprise an upper swing structure 14, a lower traveling structure 16, and a working device 18.

The upper swing structure 14 may comprise a cap 20 and a swing device 23 that rotates and drives a load. The swing device 23 can perform the function of rotating the upper swing structure 14 with respect to the lower traveling structure 16.

The lower traveling structure 16 may comprise a traveling device 25 for driving each crawler track.

The working device 18 may comprise a boom 26, an arm 28 and a bucket 30. The working device 18 may further comprise two boom cylinders 32 (only one is illustrated in FIG. 1), an arm cylinder 34 and a bucket cylinder 36. The boom cylinder 32 may operate between the upper swing structure 14 and the boom 26. The arm cylinder 34 may operate between the boom 26 and the arm 28. The bucket cylinder 36 may operate between the arm 28 and the bucket 30.

FIG. 2 is a block diagram of a hydraulic system 12 of FIG. 1.

The hydraulic system 12 may comprise a high pressure side 38 and a low pressure side 40.

In the example of FIG. 2, the high pressure side 38 and the low pressure side 40 may be arranged in a common pressure rail (CPR) architecture. The high pressure side 38 may comprise a high pressure rail and the low pressure side 40 may comprise a low pressure rail. The high pressure side 38 and the low pressure side 40 may alternatively be referred to as a high pressure circuit and a low pressure circuit, respectively. The high pressure side 38 and the low pressure side 40 may form a dual pressure system including each charging circuit having different pressure levels. The hydraulic system 12, therefore, may comprise a dedicated high pressure side 38 and a dedicated low pressure side 40. The high pressure side 38 may be connected to the rotary hydraulic machines 60, 62 and the hydraulic cylinders 32, 34, 36 through inlet valves to introduce working fluid into the rotary hydraulic machines 60, 62 and the hydraulic cylinders 32, 34, 36, and the rotary hydraulic machines 60, 62 and the hydraulic cylinders 32, 34, 36 may be connected to the low pressure side 40 through outlet valves to discharge working fluid from the rotary hydraulic machines 60, 62 and the hydraulic cylinders 32, 34, 36.

During operation of the hydraulic system 12, the pressure on the high pressure side 38 is higher than the pressure on the low pressure side 40. The pressure on the high pressure side 38 is maintained higher than the pressure on the low pressure side 40, but these pressure levels may change somewhat during operation of the hydraulic system 12. The high pressure on the high pressure side 38 may be 200 to 350 bar+10%, for example, 250 bar+10%, for example, during operation of the hydraulic system 12. The low pressure on the low pressure side 40 may be, for example, 15 to 30 bar+10% during operation of the hydraulic system 12. The high pressure on the high pressure side 38 may be, for example, 330 bar when the boom 26 is in a low position and 200 bar when the boom 26 is in a high position.

The hydraulic system 12 may further comprise a high pressure hydraulic energy storage 42 and a low pressure hydraulic energy storage 44. The high pressure hydraulic energy storage 42 may be connected to the high pressure side 38 and the low pressure hydraulic energy storage 44 may be connected to the low pressure side 40. In FIG. 2, each of the high pressure hydraulic energy storage 42 and the low pressure hydraulic energy storage 44 is illustrated as an accumulator. The high pressure hydraulic energy storage 42 may store/release hydraulic energy from/to the high pressure side 38. The low pressure hydraulic energy storage 44 may store/release hydraulic energy from/to the low pressure side 40.

The hydraulic system 12 may further comprise a main pump 46. In FIG. 2, the main pump 46 may be connected to the high pressure side 38. The main pump 46 may be disposed to pressurize the high pressure side 38. The main pump 46 is illustrated here as a variable displacement hydraulic machine that operates as both a pump and a motor.

The hydraulic system 12 may further comprise an assist pump 48. In the example of FIG. 2, the assist pump 48 may be disposed to supply pressurized fluid from a tank 50 to the low pressure side 38. The assist pump 48 of this example is a fixed displacement pump.

The main pump 46 and assist pump 48 may be driven by a power source 52 of the working machine 10. The power source 52 may comprise, for example, an internal combustion engine or an electric motor as shown in FIG. 2.

The hydraulic system 12 may further comprise a pressure relief valve 54 connected between the low pressure side 40 and the tank 50.

The hydraulic system 12 may further comprise three rotary variable displacement hydraulic machines 60, 62. The hydraulic machine 60 is arranged to rotate and drive the rotational load 22, and each of the two hydraulic machines 62 is arranged to rotate and drive its respective rotational load 24. Each hydraulic machine 60, 62 may have a displacement that varies between 0% and 100%. The hydraulic system 12 must be able to control the rotational speed of each hydraulic machine 60, 62 while the pressure on the high pressure side 38 is maintained within the high pressure range.

The hydraulic system 12 may further comprise three gear boxes 64. Each gear box 64 is disposed between the hydraulic machines 60, 62 and the rotational loads 22, 24, and may be driven by a drive shaft 66 of each hydraulic machine 60, 62.

A swing device 23 of FIG. 1 may be implemented by including the variable displacement hydraulic machine 60 and the gear box 64. A traveling device 25 of FIG. 1 may be implemented by including the variable displacement hydraulic machine 62 and the gear box 64.

The hydraulic system 12 may further comprise three valve arrangements 68. Each valve arrangement 68 may be in fluid communication with the high pressure side 38, the low pressure side 40, a first port or first side 70 of the related hydraulic machines 60, 62 and a second port or second side 72 of the related hydraulic machines 60, 62.

Additionally, each valve arrangement 68 may be configured to selectively establish fluid communication between the high pressure side 38 and the first side 70, to selectively establish fluid communication between the high pressure side 38 and the second side 72, to selectively establish fluid communication between the low pressure side 40 and the first side 70, and to selectively establish fluid communication between the low pressure side 40 and the second side 72. Accordingly, each valve arrangement 68 can be configured to switch fluid communication between the high pressure side 38 and the first side 70 to fluid communication between the high pressure side 38 and the second side 72.

The hydraulic cylinders 32, 34, 36 may be configured such that the inlet side can be in fluid communication with the high pressure side through an inlet valve (not shown), and such that the outlet side can be in fluid communication with the low pressure side through an outlet valve (not shown).

The hydraulic system 12 may comprise an operator input device 75 configured to receive an operator's request for the rotational speed of the hydraulic machines 60, 62. The operator input device may be provided in the form of a lever, for example, but the present disclosure is not limited thereto.

The hydraulic system 12 may further comprise a control unit 74. The control unit 74 includes a data processing device and a memory storing a computer program, and the computer program may include program codes that, when executed by the data processing device, cause the data processing device to perform various steps as described herein or to perform execution of various steps of instructions.

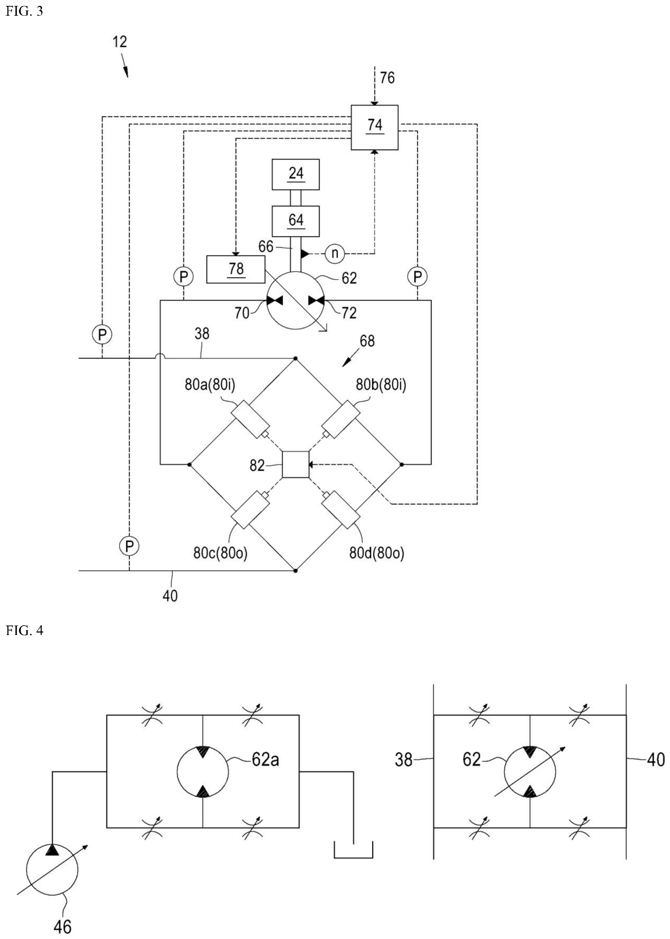

FIG. 3 is a partially enlarged view of the hydraulic system 12 of FIG. 2 showing an example of valve arrangement 68. With reference to FIG. 3, a method of controlling a rotary load 24 by a hydraulic system 12 will be described. The rotary load 22 can also be controlled in the same manner.

As shown in FIG. 3, the control unit 74 is arranged to receive a request 76 for the rotational speed of the hydraulic machine 62 input to the operator input device 75, a signal representing the rotational speed of the hydraulic machine 62, and signals representing the pressures of the high pressure side 38, the low pressure side 40, the first side 70, and the second side 72. The control unit 74 may be configured to control the valve arrangement 68 and to control the displacement of the hydraulic machine 62 by means of a displacement controller 78.

The valve arrangement 68 of this example may comprise four electro-hydraulic proportional valves 80a to 80d. Each valve 80a to 80d includes a plurality of different positions that set a plurality of different opening areas. The first valve 80a is placed between the high pressure side 38 and the first side 70. The second valve 80b is placed between the high pressure side 38 and the second side 72. The third valve 80c is placed between the low pressure side 40 and the first side 70. The fourth valve 80d is placed between the low pressure side 40 and the second side 72. The valve arrangement 68 of the example of FIG. 3 may further comprise a controller 82, for example, a PWM (Pulse Width Modulation) controller, for controlling the valves 80a to 80d based on a command from a control unit 74.

The second valve 80b and the third valve 80c can be closed, and the open area of the first valve 80a and the open area of the fourth valve 80d can be controlled to control the rotation of the rotary load 24 toward the first direction. In this case, the first valve 80a functions as an inlet valve 80i, the fourth valve 80d functions as an outlet valve 80o, the first side is in fluid communication with the high pressure side 38 as an inlet side, and the second side is in fluid communication with the low pressure side 40 as an outlet side.

The first valve 80a and the fourth valve 80d can be closed, and the open area of the second valve 80b and the open area of the third valve 80c can be controlled to control the rotation of the rotary load 24 toward the second direction which is opposite to the first direction. In this case, the second valve 80b functions as an inlet valve 80i, the third valve 80c functions as an outlet valve 80o, the second side is in fluid communication with the high pressure side 38 as an inlet side, and the first side is in fluid communication with the low pressure side 40 as an outlet side.

FIG. 4 is a conceptual diagram that simply shows the characteristics of the hydraulic system, which has a high pressure side and a low pressure side compared to a conventional hydraulic system.

Unlike a hydraulic system having a high pressure side 38 and a low pressure side 40, a conventional hydraulic system (left side of FIG. 4) uses a fixed displacement hydraulic machine 62a, for example, a fixed displacement hydraulic motor, and the rotational speed of the hydraulic machine 62a is determined by the supplied flow rate, and the direction of the flow rate, and thus the rotational direction of the hydraulic machine 62a, is determined by valves.

On the other hand, the hydraulic system (right side of FIG. 4) having a high pressure side 38 and a low pressure side 40 may use a variable displacement hydraulic machine 62, such as a variable displacement hydraulic motor, as described above, and the flow rate to the hydraulic machine 62 is not supplied directly from the hydraulic pump 46, but from the high pressure side 38, and the hydraulic pump 46 may be used only for the purpose of charging the high pressure side 38.

In a hydraulic system having a high pressure side 38 and a low pressure side 40, if the hydraulic machine 62 is controlled in the same manner as in a conventional hydraulic system, loss may increase. In the conventional hydraulic system, a fixed displacement hydraulic machine 62a is used to control pressure by adjusting only the displacement coefficient of the valve. Since it is a system that directly supplies the flow rate from the pump to the hydraulic machine 62a, the hydraulic pump 46 can supply the flow rate equivalent to the load demanded by the actuator. However, since the hydraulic system with a high pressure side 38 and a low pressure side 40 has a fixed supplied pressure, if the pressure is controlled only by a valve, there may be cases where the high pressure side pressure is not used optimally. Therefore, in a hydraulic system having a high pressure side and a low pressure side, it is necessary to use a variable displacement hydraulic machine 62 to prevent loss.

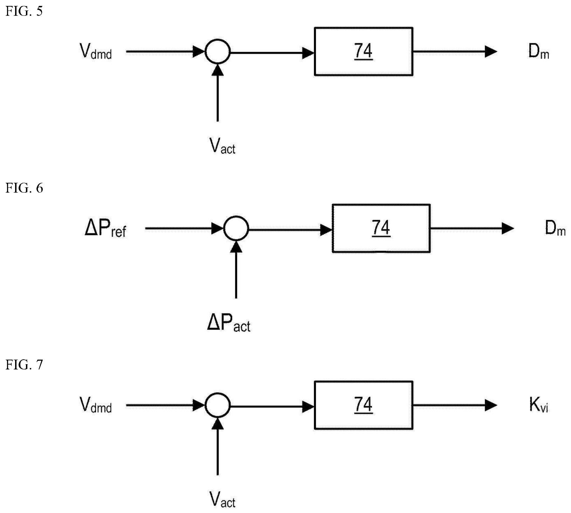

FIG. 5 is a conceptual diagram showing displacement control of a rotary hydraulic machine according to a comparative example.

In a hydraulic system having a high pressure side and a low pressure side according to a comparative example, the valve is simply fully opened to create a small pressure difference (e.g., valve displacement coefficient, $K_{vi}= 30$), and the displacement ($D_m$) of the hydraulic machine is controlled to control the rotational speed of the hydraulic machine as shown in FIG. 5. To this end, the control unit compares the demanded rotational speed ($V_{dmd}$) of the hydraulic machine corresponding to the request input to the operator input device with the actual rotational speed ($V_{act}$) of the hydraulic machine, and if the actual rotational speed ($V_{act}$) is smaller than the demanded rotational speed ($V_{dmd}$), a signal is transmitted to the hydraulic machine to increase the displacement ($D_m$) of the hydraulic machine, and if the actual rotational speed ($V_{act}$) is larger than the demanded rotational speed ($V_{dmd}$), a signal is transmitted to the hydraulic machine to decrease the displacement ($D_m$) of the hydraulic machine. In the hydraulic system of the comparative example, when an operator of a stationary working machine operates an operator input device, the control unit compares the demanded rotational speed ($V_{dmd}$) based on the movement of the operator input device with the actual speed ($V_{act}$) of the hydraulic machine. Since $V_{dmd}$ is much larger than $V_{act}$ at initial start on flat ground, the hydraulic machine is set to its maximum displacement. Afterwards, when $V_{dmd}$ and $V_{act}$ are compared and $V_{dmd}$ becomes equal to $V_{act}$, the displacement ($D_m$) of the hydraulic machine is gradually reduced to maintain an appropriate displacement. When encountering an uphill slope while traveling, $V_{act}$ becomes smaller than $V_{dmd}$, increasing $D_m$ and maintaining maximum displacement for a long time. The flow consumption, which is determined by the displacement ($D_m$) of the hydraulic machine, causes a phenomenon in which the pressure ($P_h$) on the high pressure side drops because the pressure used by the actuator exceeds the pressure at which the pump fills the accumulator due to the displacement ($D_m$) needed to match the actual rotational speed ($V_{act}$) of the hydraulic machine to the demanded rotational speed ($V_{dmd}$). In the comparative example, if the displacement ($D_m$) is lowered to decrease the flow consumption, the hydraulic machine will not be able to maintain a constant speed.

FIGS. 6 and 7 are drawings for explaining a hydraulic system according to an example of the present disclosure.

In a hydraulic system according to an example of the present disclosure, an inlet valve is controlled to adjust the rotational speed of the hydraulic machine, and the displacement ($D_m$) of the hydraulic machine is controlled for torque. This allows for simpler and more efficient control.

FIG. 6 is a conceptual diagram showing displacement control of a rotary hydraulic machine performed in a control unit.

First, before examining the hydraulic system according to the example of the present disclosure of FIG. 6, another comparative example hydraulic system will be examined in order to understand the advantages of the hydraulic system according to the example of the present disclosure of FIG. 6.

For a hydraulic machine to operate, the fluid must flow from the $P_h$ side to the $P_i$ side, and for the fluid to flow, a pressure difference must exist. However, since pressure differences result in pressure loss, it may be preferred to maintain a minimal pressure difference. Thus, in the hydraulic system of the above another comparative example, $P_h$-$P_i$ can be configured to be maintained at a minimum specific value and to supply the hydraulic machine with the minimum flow rate for operating the hydraulic machine to.

The hydraulic machine torque (Tm) is calculated by the following equation.

$$Tm = Dm * (P_i - P_o)$$

Here, Dm is the displacement of the hydraulic machine, and $P_o$ is the pressure on the outlet side of the hydraulic machine.

When the torque applied to the hydraulic machine increases, $P_i$-$P_o$ tends to increase, so $D_m$ is increased to lower $P_i$, and conversely, when the torque applied to the hydraulic machine decreases, $P_i$-$P_o$ also tends to decrease, so $D_m$ is decreased to increase $P_i$.

However, when the working machine of this other comparative example travels on an uphill slope, it may be necessary to increase $D_m$, but a situation may occur in which it can no longer be increased and $D_m$ becomes fixed, which causes ($P_i - P_o$) to not remain constant and $P_i$ to increase, and eventually, when $P_i$ increases to a magnitude equal to $P_h$, the pressure difference between $P_i$ and $P_h$ disappears, preventing the flow from the $P_h$ side to the $P_i$ side, and therefore, the hydraulic machine stops.

Therefore, in order to solve this problem in the examples of the present disclosure, the differential pressure ($\Delta P = P_h - P_i$) between the pressure on the high pressure side ($P_h$) and the pressure on the inlet side of the hydraulic machine ($P_i$) is used. In one example of the present disclosure, regarding the displacement ($D_m$) of the hydraulic machine as shown in FIG.6, the control unit 74 can perform hydraulic machine control by comparing the actual differential pressure ($\Delta P_{act}$) of the differential pressure ($\Delta P = P_h - P_i$) between the hydraulic pressure ($P_h$) on the high pressure side and the pressure ($P_i$) on the inlet side of the hydraulic machine with a preset reference differential pressure ($\Delta P_{ref}$), and generating a signal to increase the displacement ($D_m$) of the hydraulic machine when the actual differential pressure ($\Delta P_{act}$) is smaller than the preset reference differential pressure ($\Delta P_{ref}$), and generating a signal to decrease the displacement ($D_m$) of the hydraulic machine when the actual differential pressure ($\Delta P_{act}$) is larger than the reference differential pressure ($\Delta P_{ref}$). That is, assuming that Ph is maintained at a fixed value, the control unit 74 can perform hydraulic machine control to generate a signal to increase the displacement ($D_m$) of the hydraulic machine to decrease the pressure on the inlet side ($P_i$) when the actual differential pressure ($\Delta P_{act}$) becomes smaller than the preset reference differential pressure ($\Delta P_{ref}$), and to generate a signal to decrease the displacement ($D_m$) of the hydraulic machine to increase the pressure on the inlet side ($P_i$) when the actual differential pressure ($\Delta P_{act}$) becomes larger than the reference differential pressure ($\Delta P_{ref}$). The control unit 74 can transmit the generated control signal to (displacement controller 78 of) the hydraulic machine 62.

Here, the hydraulic machine may be a traveling actuator that drives the working machine, such as a traveling hydraulic motor. The reference differential pressure may be a preset differential pressure based on flat ground traveling. That is, the differential pressure normally obtained when traveling on flat ground can be set as the reference differential pressure ($\Delta P_{ref}$). Therefore, if the actual differential pressure ($\Delta P_{act}$) becomes greater than the reference differential pressure ($\Delta P_{ref}$), it may be considered as traveling on an uphill slope rather than on flat ground.

FIG. 7 is a conceptual diagram showing the control of the degree of opening of the inlet valve performed in the control unit.

The flow rate of a hydraulic machine is calculated by the following equation.

$$Q_m = K_{vi} \times \sqrt{P_h - P_i}$$

In the displacement control of the above hydraulic machine, $P_h - P_i$ was controlled to be the reference differential pressure. Therefore, $Q_m$ depends on $K_{vi}$. Additionally, the rotational speed of the hydraulic machine varies depending on $Q_m$. Therefore, as shown in FIG. 7, the rotational speed of the hydraulic machine can be controlled by $K_{vi}$. Accordingly, the control unit can perform valve control by comparing the actual rotational speed ($V_{act}$) of the hydraulic machine with the demanded rotational speed ($V_{dmd}$) of the hydraulic machine corresponding to the request input to the operator input device, and generating a signal to increase the degree of opening of the inlet valve, for example, the valve displacement coefficient ($K_{vi}$) when the actual rotational speed ($V_{act}$) becomes smaller than the demanded rotational speed ($V_{dmd}$), and generating a signal to decrease the degree of opening, for example, the valve displacement coefficient ($K_{vi}$) when the actual rotational speed ($V_{act}$) is greater than the demanded rotational speed ($V_{dmd}$). The control unit can transmit the generated control signal to (the controller 82 of) the inlet valve 80i.

In a hydraulic system according to an example of the present disclosure, a decrease in the pressure on high pressure side is not caused, and pressure loss can be minimized. In addition, the difference between the demanded rotational speed ($V_{dmd}$) and the actual rotational speed ($V_{act}$) of the hydraulic machine can be mini-

mized, and $K_{vi}$ can be provided with a small value (e.g., $K_{vi}= 10$).

Compared to the hydraulic system according to the comparative example of FIG. 5, in the hydraulic system according to the comparative example, for example, when the actual rotational speed ($V_{act}$) becomes smaller than the demanded rotational speed ($V_{dmd}$) even while traveling on flat ground, the displacement ($D_m$) of the hydraulic machine is increased, and thus, a significant pressure loss occurs at the inlet valve. In contrast, in a hydraulic system according to an example of the present disclosure, when the actual rotational speed ($V_{act}$) becomes smaller than the demanded rotational speed ($V_{dmd}$), for example, while traveling on flat ground, instead of increasing the displacement ($D_m$) of the hydraulic machine, the degree of opening of the inlet valve, for example, the valve displacement coefficient ($K_{vi}$), is increased, and thus the pressure loss at the inlet valve can be minimized.

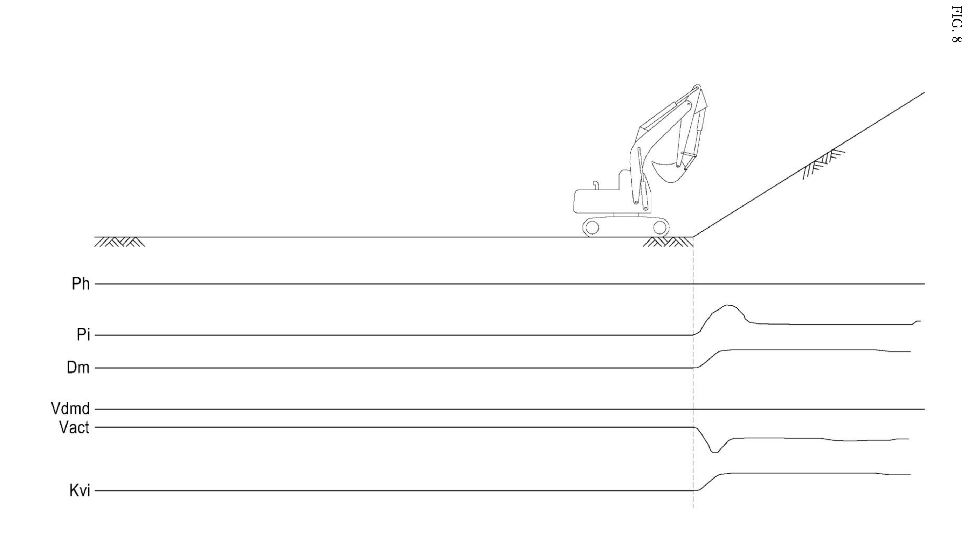

FIG. 8 is a drawing showing changes in the pressure on the inlet side and changes in displacement and actual rotational speed of a rotary hydraulic machine when a working machine having a hydraulic system according to an example of the present disclosure of FIGS. 6 and 7 is driven on flat ground and then driven on an uphill slope.

In a hydraulic system according to an example of the present disclosure, even when the working machine travels on an uphill slope, the displacement ($D_m$) of the hydraulic machine is increased in response to the increasing the pressure on the inlet side (Pi) to minimize the change in differential pressure ($P_h - P_i$). In addition, the valve displacement coefficient ($K_{vi}$) of the inlet valve is increased in response to the actual rotational speed ($V_{act}$) of the hydraulic machine being lowered, thereby minimizing the difference between the demanded rotational speed ($V_{dmd}$) and the actual rotational speed ($V_{act}$).

As mentioned above, when the working machine begins traveling an uphill slope, a phenomenon may occur in which the working machine does not move as Ph and Pi become almost equal due to an external torque. Therefore, a control algorithm is applied to maintain Ph-Pi at a constant value by adjusting the displacement ($D_m$) of the hydraulic machine to generate torque of the hydraulic machine. That is, when encountering an uphill slope, the value of (Ph-Pi) converges to almost zero, and in order to widen it to a specific differential pressure (e.g., 40 bar), the displacement ($D_m$) of the hydraulic machine is increased.

Also, when encountering an uphill slope, the speed also decreases, so, if a valve displacement coefficient ($K_{vi}$) of, for example, 10 is used on flat ground when encountering an uphill slope, the valve displacement coefficient ($K_{vi}$) is increased to supply more flow, thereby reducing the difference between the demanded rotational speed ($V_{dmd}$) and the actual rotational speed ($V_{act}$).

The present disclosure provides a method for controlling a working machine, comprising performing hydraulic machine control to increase the displacement of a hydraulic machine when the actual differential pressure between the hydraulic pressure on the high pressure side and the pressure on the inlet side of the hydraulic machine becomes smaller than a preset reference differential pressure, and to decrease the displacement of the hydraulic machine when the actual differential pressure becomes larger than the reference differential pressure.

In addition, the present disclosure provides a method for controlling a working machine, comprising performing valve control to increase the degree of opening of an inlet valve when the actual rotational speed of a hydraulic machine is lower than the demanded rotational speed of the hydraulic machine corresponding to a request input to an operator input device, and to decrease the degree of opening when the actual rotational speed is higher than the demanded rotational speed.

Further, the present disclosure discloses a control unit comprising a processing circuit configured to perform the method described above, and a computer program comprising a program code for performing the method described above when executed on the processing circuit of a computer or control unit.

The processing circuit is provided using one or more combinations of suitable central processing units (CPUs), multiprocessors, microcontrollers, digital signal processors (DSPs), and the like, capable of executing software instructions stored in a computer program product, for example, in the form of a storage medium. The processing circuit may further be provided as at least one application-specific integrated circuit (ASIC) or field programmable gate array (FPGA).

Specifically, the processing circuit is configured to cause the control unit to perform a set of operations or steps, such as the methods described above. For example, a storage medium may store a set of operations, and a processing circuit may be configured to retrieve the set of operations from the storage medium, such that the control unit performs the set of operations. A set of operations can be provided as a set of executable instructions. Accordingly, the processing circuit is arranged to execute the methods disclosed herein.

The storage medium may also include persistent storage, which may be one or a combination of, for example, magnetic memory, optical memory, solid state memory, or further, remotely mounted memory.

The control unit may further include an interface for communicating with external devices. Accordingly, the interface may include one or more transmitters and receivers containing analog and digital components and an appropriate number of ports for wireline or wireless communication.

The processing circuit controls the general operation of the control unit, for example, by sending data and control signals to the interface and storage medium, receiving data and reports from the interface, and retrieving data and instructions from the storage medium. Other components, as well as the relevant functions of the control node, are omitted to avoid obscuring the concepts presented herein.

A computer-readable medium and program code together can form a computer program product.

The terms used herein are for the purpose of describing certain aspects only and are not intended to limit the present disclosure. Unless the context explicitly indicates otherwise, plural forms may be included even if written in singular form. Additionally, the term "and/or" includes any and all combinations of one or more of the associated listed items. The term "comprising" specifies the presence of stated features, integers, steps, operations, elements and/or components, but does not preclude the presence or addition of one or more other features, integers, steps, operations, elements, components and/or groups thereof.

Comparative terms such as "below," "above," "further up," "further down," "horizontal," or "vertical" may be used herein to describe the relationship of any element depicted in the drawings to another element. These terms and the foregoing may include other orientations of the device as well as the orientation depicted in the drawings. When an element is referred to be connected or coupled to another element, this may mean not only a direct connection, but also other intervening elements. On the other hand, when an element is referred to be directly connected or coupled to another element, it implies that there are no intervening elements.

Unless otherwise defined, all terms (including technical and scientific terms) used herein have the same meaning as commonly understood by a person of ordinary skill in the art to which the present disclosure belongs. The terms used herein should be interpreted to have meanings consistent with their meanings in the context of this specification and the related art, and will not be interpreted in an idealized or overly formal sense, unless expressly defined herein.

The present disclosure is not limited to the aspects described above and illustrated in the drawings, but rather, those skilled in the art should appreciate that various changes and modifications may be made within the scope of the present disclosure and the appended claims. While many aspects have been disclosed in the drawings and specification for purposes of illustration and not limitation, the scope of the present inventive concept is set forth in the claims that follow.

**Claims**

1. A working machine, comprising;

    a high pressure side,
    a low pressure side,
    a hydraulic machine configured to rotate and drive a load,
    an inlet valve configured to allow or block fluid communication between the high pressure side and an inlet side of the hydraulic machine,
    an outlet valve configured to allow or block fluid communication between the low pressure side and an outlet side of the hydraulic machine,
    a control unit configured to perform hydraulic machine control to increase the displacement of the hydraulic machine when the actual differential pressure between the hydraulic pressure on the high pressure side and the pressure on the inlet side of the hydraulic machine becomes smaller than a preset reference differential pressure, and to decrease the displacement of the hydraulic machine when the actual differential pressure becomes larger than the reference differential pressure.

2. The working machine of claim 1,

    wherein the hydraulic machine is a traveling actuator,
    wherein the reference differential pressure is set based on the flat ground travel of the working machine.

3. The working machine of claim 1,

    further comprising an operator input device configured to receive a request for the rotational speed of the hydraulic machine,
    wherein the control unit is configured to perform valve control to, if the actual rotational speed of the hydraulic machine becomes smaller than the demanded rotational speed of the hydraulic machine corresponding to the request input to the operator input device, increase the degree of opening of the inlet valve, and if the actual rotational speed becomes greater than the demanded rotational speed, decrease the degree of opening.

4. A working machine, comprising;

    a high pressure side,
    a low pressure side,
    a hydraulic machine configured to rotate and drive a load,
    an inlet valve configured to allow or block fluid communication between the high pressure side and an inlet side of the hydraulic machine,
    an outlet valve configured to allow or block fluid communication between the low pressure side and an outlet side of the hydraulic machine,
    an operator input device configured to receive a request for the rotational speed of the hydraulic machine,
    a control unit configured to perform valve control to, if the actual rotational speed of the hydraulic machine becomes smaller than the demanded rotational speed of the hydraulic machine corresponding to a request input to the operator input device, increase the degree of opening of the inlet valve, and if the actual rotational speed becomes greater than the demanded rotational speed, decrease the degree of opening.

5. The working machine of claim 3 or 4, wherein the hydraulic machine is a traveling actuator.

6. The working machine of any one of claims 1 to 4, wherein the hydraulic machine is a hydraulic motor.

7. The working machine of any one of claims 1 to 4, further comprising at least one hydraulic cylinder and/or swing hydraulic motor in which an inlet side is configured to be in fluid communication with the high pressure side and an outlet side is configured to be in fluid communication with the low pressure side.

8. The working machine of any one of claims 1 to 4,

comprising a first valve and a second valve as the inlet valves, and a third valve and a fourth valve as the outlet valves,
wherein the first valve is arranged between the high pressure side and the first side of the hydraulic machine,
wherein the second valve is arranged between the high pressure side and the second side of the hydraulic machine,
wherein the third valve is arranged between the low pressure side and the first side,
wherein the fourth valve is arranged between the low pressure side and the second side,
wherein the first side is in fluid communication with the high pressure side as the inlet side and the second side is in fluid communication with the low pressure side as the outlet side, as the first valve is opened, the second valve is closed, the third valve is closed, and the fourth valve is opened,
wherein the second side is in fluid communication with the high pressure side as the inlet side and the first side is in fluid communication with the low pressure side as the outlet side, as the first valve is closed, the second valve is opened, the third valve is opened, and the fourth valve is closed.

9. The working machine of any one of claims 1 to 4, further comprising a pump configured to provide pressurized fluid to the high pressure side.

10. The working machine of any one of claims 1 to 4,

wherein the high pressure side comprises at least one high pressure accumulator,
wherein the low pressure side comprises at least one low pressure accumulator.

11. A method for controlling a working machine,

wherein the working machine
comprises a high pressure side, a low pressure side, a hydraulic machine configured to rotate and drive a load, an inlet valve configured to allow or block fluid communication between the high pressure side and the inlet side of the hydraulic machine, and an outlet valve configured to allow or block fluid communication between the outlet side of the hydraulic machine and the low pressure side,
wherein the method
comprises performing hydraulic machine control to increase the displacement of the hydraulic machine when the actual differential pressure between the hydraulic pressure on the high pressure side and the pressure on the inlet side of the hydraulic machine becomes smaller than a preset reference differential pressure, and to decrease the displacement of the hydraulic machine when the actual differential pressure becomes larger than the reference differential pressure.

12. The working machine of claim 11,

wherein the hydraulic machine is a traveling actuator,
wherein the reference differential pressure is set based on the flat ground travel of the working machine.

13. The method of claim 11,

wherein the working machine
further comprises an operator input device configured to receive a request for the rotational speed of the hydraulic machine,
wherein the method
comprises performing valve control to, if the actual rotational speed of the hydraulic machine becomes smaller than the demanded rotational speed of the hydraulic machine corresponding to the request input to the operator input device, increase the degree of opening of the inlet valve, and if the actual rotational speed becomes greater than the demanded rotational speed, decrease the degree of opening.

14. A method for controlling a working machine,

wherein the working machine

comprises a high pressure side, a low pressure side, a hydraulic machine configured to rotate and drive a load, an inlet valve configured to allow or block fluid communication between the high pressure side and the inlet side of the hydraulic machine, an outlet valve configured to allow or block fluid communication between the outlet side of the hydraulic machine and the low pressure side, and an operator input device configured to receive a request for the rotational speed of the hydraulic machine,
wherein the method
comprises performing valve control to, if the actual rotational speed of the hydraulic machine becomes smaller than the demanded rotational speed of the hydraulic machine corresponding to the request input to the operator input device, increase the degree of opening of the inlet valve, and if the actual rotational speed becomes greater than the demanded rotational speed, decrease the degree of opening.

15. The method of any one of claims 11 to 14,

wherein the working machine comprises a first valve and a second valve as the inlet valves, and a third valve and a fourth valve as the outlet valves,
wherein the first valve is arranged between the high pressure side and the first side of the hydraulic machine,
wherein the second valve is arranged between the high pressure side and the second side of the hydraulic machine,
wherein the third valve is arranged between the low pressure side and the first side,
wherein the fourth valve is arranged between the low pressure side and the second side,
wherein the first side is in fluid communication with the high pressure side as the inlet side and the second side is in fluid communication with the low pressure side as the outlet side, as the first valve is opened, the second valve is closed, the third valve is closed, and the fourth valve is opened,
wherein the second side is in fluid communication with the high pressure side as the inlet side and the first side is in fluid communication with the low pressure side as the outlet side, as the first valve is closed, the second valve is opened, the third valve is opened, and the fourth valve is closed.

FIG. 1

FIG. 2

FIG. 3

FIG. 4

FIG. 5

$$V_{dmd} \longrightarrow \bigcirc \longrightarrow \boxed{\underline{74}} \longrightarrow D_m$$

$$V_{act}$$

FIG. 6

$$\Delta P_{ref} \longrightarrow \bigcirc \longrightarrow \boxed{\underline{74}} \longrightarrow D_m$$

$$\Delta P_{act}$$

FIG. 7

$$V_{dmd} \longrightarrow \bigcirc \longrightarrow \boxed{\underline{74}} \longrightarrow K_{vi}$$

$$V_{act}$$

FIG. 8

## INTERNATIONAL SEARCH REPORT

| International application No. |
| --- |
| **PCT/KR2023/009352** |

**A.    CLASSIFICATION OF SUBJECT MATTER**

**E02F 9/22**(2006.01)i; **F15B 21/14**(2006.01)i; **F15B 11/05**(2006.01)i

According to International Patent Classification (IPC) or to both national classification and IPC

**B.    FIELDS SEARCHED**

Minimum documentation searched (classification system followed by classification symbols)

E02F 9/22(2006.01); E02F 9/12(2006.01); E02F 9/20(2006.01); F15B 1/027(2006.01); F15B 11/00(2006.01); F15B 13/06(2006.01); F15B 20/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고압측(high pressure side), 저압측(low pressure side), 유압기계(hydraulic machinery), 유입밸브(inlet valve), 유출밸브(outlet valve), 제어유닛(control unit), 작업기계(work machine)

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2022-0010029 A (VOLVO CONSTRUCTION EQUIPMENT AB et al.) 25 January 2022 (2022-01-25)<br>See paragraphs [0004] and [0062]-[0093] and figures 1-4. | 4-10,14-15 |
| A | | 1-3,11-13 |
| Y | US 2012-0180470 A1 (SCHROEDER et al.) 19 July 2012 (2012-07-19)<br>See paragraph [0048] and figures 5-6. | 4-10,14-15 |
| A | JP 2009-092150 A (KOBELCO CONSTRUCTION MACHINERY LTD.) 30 April 2009 (2009-04-30)<br>See paragraph [0060] and figure 4. | 1-15 |
| A | WO 2017-106536 A1 (EATON CORPORATION) 22 June 2017 (2017-06-22)<br>See page 5, line 25 - page 8, line 6 and figure 3. | 1-15 |

✓ Further documents are listed in the continuation of Box C.       ✓ See patent family annex.

| | |
| --- | --- |
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **18 April 2024** | **18 April 2024** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/009352** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2017-0073933 A1 (KOMATSU LTD.) 16 March 2017 (2017-03-16)<br>See paragraphs [0061]-[0063] and figures 2 and 5. | 1-15 |

Form PCT/ISA/210 (second sheet) (July 2022)

**INTERNATIONAL SEARCH REPORT**

International application No.

**PCT/KR2023/009352**

| Box No. III | Observations where unity of invention is lacking (Continuation of item 3 of first sheet) |
| --- | --- |

This International Searching Authority found multiple inventions in this international application, as follows:

Claims 1-3 and 11-13 pertain to a work machine comprising a high-pressure side, a low-pressure side, a hydraulic machine, an inlet valve, an outlet valve, and
a control unit for adjusting the capacity of the hydraulic machine by comparing an actual differential pressure to a reference differential pressure,

Claims 4-10 and 14-15 pertain to a work machine comprising a high-pressure side, a low-pressure side, a hydraulic machine, an inlet valve, an outlet valve, and
a control unit for adjusting the opening amount of the inlet valve by comparing a required rotational speed to an actual rotational speed.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

INTERNATIONAL SEARCH REPORT
Information on patent family members

International application No.

**PCT/KR2023/009352**

| Patent document cited in search report | | | Publication date (day/month/year) | Patent family member(s) | | | Publication date (day/month/year) |
|---|---|---|---|---|---|---|---|
| KR | 10-2022-0010029 | A | 25 January 2022 | CN | 113874585 | A | 31 December 2021 |
| | | | | CN | 113874585 | B | 04 April 2023 |
| | | | | EP | 3973110 | A1 | 30 March 2022 |
| | | | | EP | 3973110 | B1 | 05 July 2023 |
| | | | | US | 11795661 | B2 | 24 October 2023 |
| | | | | US | 2022-0220702 | A1 | 14 July 2022 |
| | | | | WO | 2020-233793 | A1 | 26 November 2020 |
| US | 2012-0180470 | A1 | 19 July 2012 | BR | 112013014652 | A2 | 15 May 2018 |
| | | | | CA | 2821498 | A1 | 21 June 2012 |
| | | | | CN | 103403270 | A | 20 November 2013 |
| | | | | CN | 103403270 | B | 06 January 2016 |
| | | | | EP | 2652213 | A2 | 23 October 2013 |
| | | | | EP | 2652213 | B1 | 30 August 2017 |
| | | | | JP | 2014-505212 | A | 27 February 2014 |
| | | | | JP | 6138050 | B2 | 31 May 2017 |
| | | | | KR | 10-1880323 | B1 | 19 July 2018 |
| | | | | KR | 10-2014-0043315 | A | 09 April 2014 |
| | | | | MX | 2013006666 | A | 29 July 2013 |
| | | | | US | 9879404 | B2 | 30 January 2018 |
| | | | | WO | 2012-082728 | A2 | 21 June 2012 |
| | | | | WO | 2012-082728 | A3 | 09 August 2012 |
| JP | 2009-092150 | A | 30 April 2009 | JP | 5119845 | B2 | 16 January 2013 |
| WO | 2017-106536 | A1 | 22 June 2017 | None | | | |
| US | 2017-0073933 | A1 | 16 March 2017 | CN | 106133409 | A | 16 November 2016 |
| | | | | CN | 106133409 | B | 12 April 2019 |
| | | | | EP | 3273110 | A1 | 24 January 2018 |
| | | | | EP | 3273110 | B1 | 28 July 2021 |
| | | | | JP | 6198846 | B2 | 20 September 2017 |
| | | | | US | 9631345 | B2 | 25 April 2017 |
| | | | | WO | 2016-043222 | A1 | 24 March 2016 |

Form PCT/ISA/210 (patent family annex) (July 2022)